Europäisches Patentamt

European Patent Office

Office européen des brevets

(11) Publication number: **0 526 895 A2**

# EUROPEAN PATENT APPLICATION

(21) Application number: **92113404.5**

(22) Date of filing: **06.08.92**

(51) Int. Cl.5: **C08L 63/00**, C09J 163/00

(30) Priority: **07.08.91 JP 197896/91**
**07.08.91 JP 197897/91**
**30.01.92 JP 14969/92**

(43) Date of publication of application:
**10.02.93 Bulletin 93/06**

(84) Designated Contracting States:
**BE DE FR GB IT NL**

(71) Applicant: **MITSUBISHI RAYON CO., LTD**
**3-19, Kyobashi 2-chome Chuo-ku**
**Tokyo(JP)**

(72) Inventor: **Matsumoto, Koji, c/o Otake Plants**
**Mitsubishi Rayon Co., Ltd., 20-1, Miyukicho**
**Otake-shi, Hiroshima-ken(JP)**
Inventor: **Osuka, Masahiro, c/o Otake Plants**
**Mitsubishi Rayon Co., Ltd., 20-1, Miyukicho**
**Otake-shi, Hiroshima-ken(JP)**

(74) Representative: **Tiedtke, Harro, Dipl.-Ing.**
**Patentanwälte Tiedtke-Bühling- Kinne &**
**Partner Bavariaring 4 Postfach 20 24 03**
**W-8000 München 2(DE)**

(54) **Epoxy resin composition for sealing.**

(57) An epoxy resin composition for sealing is here disclosed which is characterized by comprising a composition (A) comprising an epoxy resin, a curing agent and an inorganic filler and a graft copolymer (B) obtained by graft polymerizing 65 to 15 parts by weight of a monomer mixture (b) comprising a vinyl monomer containing an alkyl methacrylate ester as an essential component in the presence of a latex containing 35 to 85 parts by weight of a rubber polymer obtained by the emulsion polymerization of a monomer mixture (a) comprising 50% by weight or more of a diene monomer and the residual percent of a copolymerizable vinyl monomer, at least one of the monomer mixture (a) and the monomer mixture (b) containing 0.05 to 20% by weight of a polyfunctional monomer.

This epoxy resin composition exhibits low stress, and it is excellent in humidity resistance, heat cycle test resistance, moldability and dispersibility and is suitable for use in electronic and electrical parts.

## BACKGROUND OF THE INVENTION

### (i) Field of the Invention

The present invention relates to a resin composition for sealing which exhibits low stress and which is excellent in humidity resistance, heat cycle test resistance, moldability and dispersibility and which is suitable for use in electronic and electrical parts and the like.

### (ii) Description of the Prior Art

Epoxy resins have excellent electrical insulating properties, mechanical properties, and the like, and are therefore widely used for sealing and impregnating electronic and electrical parts such as diodes, transistors and integrated circuits with high reliability. Thermosetting resins, and particularly epoxy resins, are most often used particularly for the purpose of sealing semiconductor devices because they are inexpensive and can be used in mass production processes, in contrast to conventional hermetic systems using glass, metal, or ceramics.

In recent years, however, there has been a tendency toward increasing size of semiconductor elements as the function of elements becomes more complex, and problems involving stress on the elements at the time of sealing/molding and thermal stress arising during packaging steps such as soldering now have an increasingly detrimental effect on the reliability of semiconductors which has reached a critical level. Examples of resulting problems include the occurrence of cracks and the like during heat cycle tests and the breakage of bonding wires.

One technique for obtaining a sealing resin exhibiting low stress, excellent humidity resistance, and tolerance to heat cycle tests comprises the utilization of a rubber or the like to decrease the elasticity modulus and thermal stress. For example, a method in which an MBS resin is used has been proposed (Japanese Patent Laid-open Nos. 22825/1987, 225618/1988, 245426/1988 and 146948/1989).

However, when ordinary MBS resin is used, the strength and the glass transition temperature of the sealing resin deteriorate and the moldability and fluidity of the resin are impaired. Moreover, the dispersibility of the MBS resin itself is also poor.

## SUMMARY OF THE INVENTION

An object of the present invention is to provide an epoxy resin composition for highly reliable sealing with low stress which exhibits excellent heat cycle test resistance, humidity resistance, moldability, fluidity, and dispersibility in a blend and which retains the advantages of conventional epoxy resins.

That is, the present invention is directed to an epoxy resin composition for sealing characterized by comprising 100 parts by weight of a composition (A) comprising an epoxy resin, a curing agent and an inorganic filler and 0.1 to 20 parts by weight of a graft copolymer (B) obtained by graft polymerizing, at one time or dividedly, 65 to 15 parts by weight of a monomer mixture (b) comprising a vinyl monomer containing an alkyl methacrylate as an essential component in the presence of a latex containing 35 to 85 parts by weight of a rubber polymer obtained by the emulsion polymerization of a monomer mixture (a) comprising 50% by weight or more of a diene monomer and the residual percent of a copolymerizable vinyl monomer, at least one of the monomer mixture (a) and the monomer mixture (b) containing 0.05 to 20% by weight of a polyfunctional monomer.

## DETAILED DESCRIPTION OF THE PREFERRED EMBODIMENTS

As an epoxy resin constituting a composition (A), various known epoxy resins can be used, and no particular restriction is put on a molecular structure, a molecular weight and the like, so long as the epoxy resin has at least two epoxy groups in its molecule. Examples of the epoxy resin include a bisphenol A type epoxy resin, a phenolic novolak type epoxy resin and a cresol novolak type epoxy resin, and the epoxy resin containing less amounts of impurities and hydrolyzable chlorine is preferable.

Examples of a curing agent include a phenolic curing agent such as a phenol novolak resin and a cresol novolak resin; an amine curing agent and an acid anhydride curing agent. These curing agents may be used singly or in combination. No particular restriction is put on the amount of the curing agent, but its stoichiometric amount enough to cure the epoxy groups is necessary.

As an inorganic filler, a known filler can be used. Examples of the inorganic filler include powders of crystalline silica, fused silica, calcium silicate, alumina, calcium carbonate, talc, barium sulfate and the like, and glass fibers. The amount of the inorganic filler to be blended is preferably 25-90% by weight with respect to 75-10% by weight of the total weight of the epoxy resin and the curing agent. In the composition (A) in which the amount of the inorganic filler is less than 25% by weight, humidity resistance, heat resistance, mechanical properties and moldability cannot be effectively improved. When the amount is more than 90% by weight, the composition is bulky and poor in moldability, and so it is not practical.

If necessary, various additives can be suitably added to the composition (A), and examples of the additives include a mold release agent such as a natural wax, a synthetic wax, a metallic salt of a straight-chain fatty acid, an acid amide, an ester or a paraffin; a flame retardant such as a chlorinated paraffin, bromotoluene, hexabromobenzene and antimony trioxide; a coloring agent such as carbon black and red iron oxide; a silane coupling agent; and curing promotors.

Next, detailed reference will be made to a graft copolymer (B) which is used in the epoxy resin composition for sealing of the present invention.

A rubber polymer constituting the graft copolymer (B) is a diene polymer obtained by the one-stage or multi-stage emulsion polymerization of a monomer mixture (a) comprising 50% by weight or more of a diene monomer and the residual percent of a copolymerizable vinyl monomer. The monomer mixture (a) may be composed of 100% by weight of the diene monomer.

Examples of the diene monomer which is used to form the rubber polymer include butadiene and isoprene, and 1,3-butadiene is preferable.

Examples of the copolymerizable vinyl monomer include aromatic vinyl monomers such as styrene and $\alpha$-methylstyrene; alkyl methacrylates such as methyl methacrylate and ethyl methacrylate; alkyl acrylates such as ethyl acrylate and n-butyl acrylate; unsaturated nitriles such as acryronitrile and methacrylonitrile; vinyl ethers such as methyl vinyl ether and butyl vinyl ether; vinyl halides such as vinyl chloride and vinyl bromide; vinylidene halides such as vinylidene chloride and vinylidene bromide; and vinyl monomers having a glycidyl group such as glycidyl acrylate, glycidyl methacrylate, allyl glycidyl ether and ethylene glycol glycidyl ether.

These vinyl monomers can be used singly or in combination. If necessary, a chain transfer agent such as t-dodecylmercaptan or n-octylmercaptan can be also used. The composition ratio of the constitutional components of the rubber polymer should be in the above-mentioned range, and if it deviates from this range, the object of the present invention cannot be sufficiently achieved.

The graft copolymer (B) which is used in the present invention can be obtained by the one-stage or multi-stage graft polymerization of 65 to 15 parts by weight of the monomer mixture (b) comprising the vinyl monomer containing an alkyl methacrylate as the essential component in the presence of the latex containing 35 to 85 parts by weight of the rubber polymer having the above-mentioned constitution. It is preferable that the alkyl methacrylate is contained in an amount of 20% by weight or more and more preferably in an amount of 45% by weight or more in the monomer mixture (b). This monomer mixture (b) may be composed of 100% by weight of the alkyl methacrylate.

Examples of the alkyl methacrylate include methyl methacrylate, ethyl methacrylate and propyl methacrylate, and methyl methacrylate is particularly preferable.

Examples of the copolymerizable vinyl monomer which can be added to the alkyl methacrylate include aromatic vinyl monomers such as styrene and $\alpha$-methylstyrene; alkyl acrylates such as ethyl acrylate and n-butyl acrylate; unsaturated nitriles such as acrylonitrile and methacrylonitrile; vinyl ethers such as methyl vinyl ether and butyl vinyl ether; vinyl halides such as vinyl chloride and vinyl bromide; vinylidene halides such as vinylidene chloride and vinylidene bromide; vinyl monomers having a glycidyl group such as glycidyl acrylate, glycidyl methacrylate, allyl glycidyl ether and ethylene glycol glycidyl ether; and vinyl monomers having an amino group such as diethylaminoethyl methacrylate, diethylaminoethyl acrylate, diethylaminobutene and vinylpyridine. These monomers may be used singly or in combination. If necessary, a chain transfer agent such as t-dodecylmercaptan or n-octylmercaptan can be also used.

In order to improve fluidity, a polyfunctional monomer should be added to at least one of the monomer mixture (a) and the monomer mixture (b). That is, in the case that the polyfunctional monomer is not contained in the monomer mixture (b), the polyfunctional monomer should be included in the monomer mixture (a) in the range of 0.05 to 20% by weight and preferably 0.2 to 10% by weight. In the case that the polyfunctional monomer is not contained in the monomer mixture (a), the polyfunctional monomer should be included in the monomer mixture (b) in the range of 0.05 to 20% by weight and preferably 0.05 to 10% by weight. Alternatively, 0.05 to 20% by weight of the polyfunctional monomer may be included in both of the monomer mixtures (a) and (b), and it is preferable that the polyfunctional monomer is contained in the monomer mixture (a) in the range of 0.2 to 10% by weight and in the monomer mixture (b) in the range of 0.05 to 10% by weight.

Examples of the polyfunctional monomer include aromatic polyfunctional vinyl compounds such as divinylbenzene and divinyltoluene; esters of acrylic acid or methacrylic acid and polyols such as ethylene glycol dimethacrylate, 1,3-butanediol diacrylate, trimethylolpropane triacrylate and pentaerythritol tetraacrylate; allyl esters of carboxylic acids such as allyl acrylate and allyl methacrylate; and diallyl and triallyl compounds such as diallyl phthalate, diallyl sebacate and triallyltriazine.

These polyfunctional monomers may be used singly or in combination.

For the purpose of improving the dispersibility, the polyfunctional monomer is used in an amount of 20% by weight or less in the both of monomer mixtures (a) and (b), but when the amount of the polyfunctional group is in excess of 20% by weight, the effect of decreasing the stress is unpreferably low.

The ratio of the rubber polymer in the graft copolymer (B) is suitably in the range of from 35 to 85% by weight. When the amount of the rubber polymer is less than 35% by weight, the effect of decreasing the stress declines, and when it is more than 85% by weight, moldability is unpreferably poor.

The graft polymerization can be achieved by adding the monomer mixture at one time, or dividing the same into two or more portions and then adding them so as to carry out the graft polymerization dividedly in some steps. The achievement of the graft polymerization in some steps permits obtaining the graft copolymer resin in which the particle outsides of the resin comprise a component having a good compatibility with the epoxy resin to be mixed therewith.

The size of the particles of the graft copolymer, when being in a latex state, is preferably an average particle diameter in the range of from 0.05 to 0.6 $\mu$m. The particle diameter of the graft copolymer can be suitably adjusted by selecting the kinds and amounts of emulsifying agent and catalyst and by selecting a polymerization temperature at the synthesis of the rubber polymer. Alternatively, the particle diameter of the graft copolymer can be adjusted by suitably adding, to the rubber polymer latex having a small particle diameter, an inorganic acid such as hydrochloric acid or sulfuric acid, an organic acid, an inorganic salt, an organic salt or a polymer latex having a carboxyl group which is usually known as a latex coagulant, to increase the particle size, and then performing the graft polymerization. When the particle diameter of the graft copolymer is less than 0.05 $\mu$m, the effect of decreasing the stress is unpreferably low, and when it is more than 0.6 $\mu$m, the dispersibility and the fluidity are unpreferably poor.

Examples of a polymerization initiator which is used in the preparation of the graft copolymer include persulfates such as potassium persulfate, ammonium persulfate and sodium persulfate; organic peroxides such as t-butyl hydroperoxide, cumene hydroperoxide, benzoyl peroxide, lauroyl peroxide and diisopropylbenzene hydroperoxide; and azo compounds such as azobisisobutylonitrile and azobisisovaleronitrile. In addition thereto, as a redox initiator, there can be also used a combination of any one of the above-mentioned compounds and a sulfite, a hydrogensulfite, a thiosulfate, a primary metal salt, sodium formaldehyde sulfoxylate or dextrose.

As the polymerization process, an emulsion polymerization can be used, and the polymerization can be suitably carried out in the range of from about 40 to about 80°C, depending upon the kind of polymerization initiator. Furthermore, as the emulsifying agent, a known emulsifying agent can be suitably used.

The obtained graft copolymer is, if necessary, mixed with a suitable antioxidant and additives, suitably coagulated by the use of a coagulant comprising an acid such as sulfuric acid, hydrochloric acid or phosphoric acid, or a salt such as calcium chloride or sodium chloride, subjected to a heat treatment to solidify the resin, dehydrated, washed and then dried to obtain the copolymer in a powder state.

A usual method for preparing the epoxy resin composition for sealing of the present invention as a molding material comprises sufficiently uniformly mixing a raw material composition of the epoxy resin, the curing agent, the inorganic filler, the graft copolymer and other additives in a suitable ratio by means of a mixer or the like, further carrying out a melting/mixing treatment by rolls or a mixing treatment by a kneader, cooling the mixture to solidify the same, and then grinding it into a suitable size to obtain the desired molding material.

The epoxy resin composition of the present invention comprises the blend of 100 parts by weight of a composition (A) comprising the epoxy resin, the curing agent and the inorganic filler, and 0.1 to 20 parts by weight of the graft copolymer (B). When the amount of the graft copolymer (B) is less than 0.1 parts by weight, the effect of the added graft copolymer (B) is scarcely obtained, and when it is more than 20 parts by weight, excellent properties of the epoxy resin composition are unpreferably liable to be lost.

Next, the present invention will be described in more detail in reference to examples, but these examples do not intend to limit the present invention.

In the examples and comparative examples, "part" and "parts" are by weight.

(1) Synthesis of rubber polymer latexes A-1 to A-17

4

| Synthesis of a rubber polymer latex (A-1) | |
|---|---|
| 1,3-Butadiene (hereinafter abbreviated to "Bd") | 73 parts |
| Styrene (hereinafter abbreviated to "St") | 22 parts |
| Divinylbenzene (hereinafter abbreviated to "DVB") | 5 parts |
| Diisopropylbenzene hydroperoxide | 0.4 part |
| Sodium pyrophosphate | 1.5 parts |
| Ferrous sulfate | 0.01 part |
| Dextrose | 1 part |
| Deionized water | 100 parts |

The above-mentioned materials were placed in a pressure-resistant autoclave, and reaction was then carried out at 50°C for 18 hours while the mixture was stirred, to prepare a rubber polymer latex (polymerization ratio = 98% by weight, and average particle diameter = 0.13 μm).

| Synthesis of a rubber polymer latex (A-2) | |
|---|---|
| Bd | 78 parts |
| St | 12 parts |
| DVB | 10 parts |
| Diisopropylbenzene hydroperoxide | 0.4 part |
| Sodium pyrophosphate | 1.5 parts |
| Ferrous sulfate | 0.01 part |
| Dextrose | 1 part |
| Deionized water | 100 parts |

The above-mentioned materials were placed in a pressure-resistant autoclave, and reaction was then carried out at 50°C for 18 hours while the mixture was stirred, to prepare a rubber polymer latex (polymerization ratio = 98% by weight, and average particle diameter = 0.13 μm).

| Synthesis of a rubber polymer latex (A-3) | |
|---|---|
| Bd | 60 parts |
| St | 22 parts |
| 1,3-butylene glycol dimethacrylate (hereinafter abbreviated to "1,3BD") | 18 parts |
| Diisopropylbenzene hydroperoxide | 0.4 part |
| Sodium pyrophosphate | 1.5 parts |
| Ferrous sulfate | 0.01 part |
| Dextrose | 1 part |
| Deionized water | 100 parts |

The above-mentioned constitutional materials were placed in a pressure-resistant autoclave, and reaction was then carried out at 50°C for 18 hours while the mixture was stirred, to prepare a rubber polymer latex (polymerization ratio = 98% by weight, and average particle diameter = 0.13 μm).

| Synthesis of a rubber polymer latex (A-4) | |
|---|---|
| Bd | 95 parts |
| 1,3BD | 5 parts |
| Diisopropylbenzene hydroperoxide | 0.4 part |
| Sodium pyrophosphate | 1.5 parts |
| Ferrous sulfate | 0.01 part |
| Dextrose | 1 part |
| Deionized water | 100 parts |

The above-mentioned materials were placed in a pressure-resistant autoclave, and reaction was then

carried out at 50°C for 18 hours while the mixture was stirred, to prepare a rubber polymer latex (polymerization ratio = 98% by weight, and average particle diameter = 0.13 μm).

| Synthesis of a rubber polymer latex (A-5) | |
| --- | --- |
| Bd | 80 parts |
| St | 19.8 parts |
| 1,3BD | 0.2 part |
| Diisopropylbenzene hydroperoxide | 0.4 part |
| Sodium pyrophosphate | 1.5 parts |
| Ferrous sulfate | 0.01 part |
| Dextrose | 1 part |
| Deionized water | 100 parts |

The above-mentioned materials were placed in a pressure-resistant autoclave, and reaction was then carried out at 50°C for 18 hours while the mixture was stirred, to prepare a rubber polymer latex (polymerization ratio = 98% by weight, and average particle diameter = 0.13 μm).

| Synthesis of a rubber polymer latex (A-6) | |
| --- | --- |
| Bd | 75 parts |
| St | 25 parts |
| Diisopropylbenzene hydroperoxide | 0.4 part |
| Sodium pyrophosphate | 1.5 parts |
| Ferrous sulfate | 0.01 part |
| Dextrose | 1 part |
| Deionized water | 100 parts |

The above-mentioned materials were placed in a pressure-resistant autoclave, and reaction was then carried out at 50°C for 18 hours while the mixture was stirred, to prepare a rubber polymer latex (polymerization ratio = 98% by weight, and average particle diameter = 0.13 μm).

| Synthesis of a rubber polymer latex (A-7) | |
| --- | --- |
| Bd | 35 parts |
| St | 55 parts |
| 1,3BD | 10 parts |
| Diisopropylbenzene hydroperoxide | 0.4 part |
| Sodium pyrophosphate | 1.5 parts |
| Ferrous sulfate | 0.01 part |
| Dextrose | 1 part |
| Deionized water | 100 parts |

The above-mentioned materials were placed in a pressure-resistant autoclave, and reaction was then carried out at 50°C for 18 hours while the mixture was stirred, to prepare a rubber polymer latex (polymerization ratio = 98% by weight, and average particle diameter = 0.13 μm).

| Synthesis of a rubber polymer latex (A-8) | |
|---|---|
| Bd | 60 parts |
| St | 10 parts |
| DVB | 30 parts |
| Diiopropylbenzene hydroperoxide | 0.4 part |
| Sodium pyrophosphate | 1.5 parts |
| Ferrous sulfate | 0.01 part |
| Dextrose | 1 part |
| Deionized water | 100 parts |

The above-mentioned materials were placed in a pressure-resistant autoclave, and reaction was then carried out at 50°C for 18 hours while the mixture was stirred, to prepare a rubber polymer latex (polymerization ratio = 98% by weight, and average particle diameter = 0.13 $\mu$m).

| Synthesis of a rubber polymer latex (A-9) | |
|---|---|
| Bd | 100 parts |
| n-Octyl mercaptan | 0.8 part |
| Diisopropylbenzene hydroperoxide | 0.4 part |
| Sodium pyrophosphate | 1.5 parts |
| Ferrous sulfate | 0.005 part |
| Dextrose | 1 part |
| Anhydrous sodium sulfate | 1 part |
| Potassium oleate (hereinafter abbreviated to "PO") | 0.8 part |
| Deionized water | 100 parts |

The above-mentioned materials were placed in a pressure-resistant autoclave, and reaction was then carried out at 50°C for 72 hours while the mixture was stirred. Afterward, 3 parts of PO and 10 parts of deionized water were added thereto, thereby preparing a rubber polymer latex (A-9) (polymerization ratio = 98% by weight, and average particle diameter = 0.46 $\mu$m).

| Synthesis of a rubber polymer latex (A-10) | |
|---|---|
| Bd | 80 parts |
| St | 17 parts |
| DVB | 3 parts |
| Diisopropylbenzene hydroperoxide | 0.4 part |
| Sodium pyrophosphate | 1.5 parts |
| Ferrous sulfate | 0.02 part |
| Dextrose | 1 part |
| PO | 2.0 parts |
| Deionized water | 100 parts |

The above-mentioned materials were placed in a pressure-resistant autoclave, and reaction was then carried out at 50°C for 15 hours while the mixture was stirred, to prepare a rubber polymer latex (A-10) (polymerization ratio = 98% by weight, and average particle diameter = 0.10 $\mu$m).

| Synthesis of a rubber polymer latex (A-11) | |
| --- | --- |
| Bd | 60 parts |
| St | 40 parts |
| t-Dodecyl mercaptan | 0.5 part |
| Diisopropylbenzene hydroperoxide | 0.4 part |
| Sodium pyrophosphate | 1.5 parts |
| Ferrous sulfate | 0.02 part |
| Dextrose | 1 part |
| PO | 2.0 parts |
| Deionized water | 100 parts |

The above-mentioned materials were placed in a pressure-resistant autoclave, and reaction was then carried out at 50°C for 15 hours while the mixture was stirred, to prepare a rubber polymer latex (A-11) (polymerization ratio = 98% by weight, and average particle diameter = 0.10 $\mu$m).

| Synthesis of a rubber polymer latex (A-12) | |
| --- | --- |
| Bd | 75 parts |
| St | 20 parts |
| DVB | 5 parts |
| Diisopropylbenzene hydroperoxide | 0.4 part |
| Sodium pyrophosphate | 1.5 parts |
| Ferrous sulfate | 0.01 part |
| Dextrose | 1 part |
| Anhydrous sodium sulfate | 1 part |
| PO | 1 part |
| Deionized water | 100 parts |

The above-mentioned materials were placed in a pressure-resistant autoclave, and reaction was then carried out at 50°C for 48 hours while the mixture was stirred. Afterward, 3 parts of PO and 10 parts of deionized water were added thereto, thereby preparing a rubber polymer latex (A-12) (polymerization ratio = 98% by weight, and average particle diameter = 0.30 $\mu$m).

| Synthesis of a rubber polymer latex (A-13) | |
| --- | --- |
| Bd | 40 parts |
| St | 60 parts |
| t-Dodecyl mercaptan | 0.5 part |
| Diisopropylbenzene hydroperoxide | 0.4 part |
| Sodium pyrophosphate | 1.5 parts |
| Ferrous sulfate | 0.01 part |
| Dextrose | 1 part |
| PO | 1.5 parts |
| Deionized water | 100 parts |

The above-mentioned materials were placed in a pressure-resistant autoclave, and reaction was then carried out at 50°C for 36 hours while the mixture was stirred, to prepare a rubber polymer latex (A-13) (polymerization ratio = 98% by weight, and average particle diameter = 0.21 $\mu$m).

| Synthesis of a rubber polymer latex (A-14) | |
|---|---|
| Bd | 78 parts |
| St | 12 parts |
| DVB | 10 parts |
| Diisopropylbenzene hydroperoxide | 0.4 part |
| Sodium pyrophosphate | 1.5 parts |
| Ferrous sulfate | 0.02 part |
| Dextrose | 1 part |
| Anhydrous sodium sulfate | 1.5 parts |
| PO | 1.7 parts |
| Deionized water | 100 parts |

The above-mentioned materials were placed in a pressure-resistant autoclave, and reaction was then carried out at 50°C for 24 hours while the mixture was stirred, to prepare a rubber polymer latex (A-14) (polymerization ratio = 98% by weight, and average particle diameter = 0.17 $\mu$m).

| Synthesis of a rubber polymer latex (A-15) | |
|---|---|
| Bd | 82 parts |
| DVB | 18 parts |
| Diisopropylbenzene hydroperoxide | 0.4 part |
| Sodium pyrophosphate | 1.5 parts |
| Ferrous sulfate | 0.02 part |
| Dextrose | 1 part |
| Anhydrous sodium sulfate | 1.5 parts |
| PO | 1.7 parts |
| Deionized water | 100 parts |

The above-mentioned materials were placed in a pressure-resistant autoclave, and reaction was then carried out at 50°C for 24 hours while the mixture was stirred, to prepare a rubber polymer latex (A-15) (polymerization ratio = 98% by weight, and average particle diameter = 0.16 $\mu$m).

| Synthesis of a rubber polymer latex (A-16) | |
|---|---|
| Bd | 60 parts |
| St | 16 parts |
| DVB | 24 parts |
| Diisopropylbenzene hydroperoxide | 0.4 part |
| Sodium pyrophosphate | 1.5 parts |
| Ferrous sulfate | 0.02 part |
| Dextrose | 1 part |
| PO | 2 parts |
| Deionized water | 100 parts |

The above-mentioned materials were placed in a pressure-resistant autoclave, and reaction was then carried out at 50°C for 13 hours while the mixture was stirred, to prepare a rubber polymer latex (A-16) (polymerization ratio = 98% by weight, and average particle diameter = 0.11 $\mu$m).

| Synthesis of a rubber polymer latex (A-17) | |
|---|---|
| Bd | 80 parts |
| St | 20 parts |
| Diisopropylbenzene hydroperoxide | 0.4 part |
| Sodium pyrophosphate | 1.5 parts |
| Ferrous sulfate | 0.02 part |
| Dextrose | 1 part |
| PO | 1.5 parts |
| Deionized water | 100 parts |

The above-mentioned materials were placed in a pressure-resistant autoclave, and reaction was then carried out at 50°C for 36 hours while the mixture was stirred, to prepare a rubber polymer latex (A-17) (polymerization ratio = 98% by weight, and average particle diameter = 0.20 $\mu$m).

(2) Synthesis of graft copolymers B-1 to C-13 Synthesis of a graft copolymer (B-1)

60 parts (in terms of a solid) of a rubber polymer latex (A-1), 1.2 parts of PO, 0.8 part of Rongalit and 150 parts of deionized water (inclusive of water present in the rubber polymer latex) (with regard to the amount of the deionized water, the same shall apply in all of the undermentioned synthesis examples) were placed in a nitrogen-substituted flask. The temperature in the flask was maintained at 70°C, and a mixture of 40 parts of methyl methacrylate (hereinafter abbreviated to "MMA") and 0.8 part of cumene hydroperoxide (hereinafter abbreviated to "CHP") was added dropwise thereto over 1 hour. Afterward, the solution was then retained for 1 hour to bring polymerization to an end (average particle diameter = 0.18 $\mu$m).

Next, to the resultant graft copolymer latex was added 0.5 part of butylated hydroxytoluene (hereinafter abbreviated to "BHT"), and a 0.2% by weight aqueous sulfuric acid solution was then added to coagulate the copolymer latex. This latex was then subjected to a heat treatment at 90°C to solidify it. Afterward, the resultant solid was washed with warm water, and then dried to obtain a graft copolymer (B-1) powder.

Synthesis of a graft copolymer (B-2)

75 parts (in terms of a solid) of a rubber polymer latex (A-2), 1.2 parts of PO, 0.5 part of Rongalit and 150 parts of deionized water were placed in a nitrogen-substituted flask. The temperature in the flask was maintained at 70°C, and in the first step, a mixture of 5 parts of St and 0.1 part of CHP was added dropwise thereto over 1 hour and the solution was then retained for 1 hour. Afterward, in the second step, a mixture of 20 parts of MMA and 0.4 part of CHP was continuously added dropwise thereto over 1 hour in the presence of the polymer obtained in the previous step. Afterward, the solution was then retained for 2 hours to bring polymerization to an end (average particle diameter = 0.17 $\mu$m).

Next, to the resultant graft copolymer latex was added 0.5 part of BHT, and a 0.2% by weight aqueous sulfuric acid solution was then added to coagulate the copolymer latex. This copolymer latex was subjected to a heat treatment at 90°C to solidify the same. Afterward, the resultant solid was washed with warm water, and then dried to obtain a graft copolymer (B-2) powder.

Synthesis of a graft copolymer (B-3)

45 parts (in terms of a solid) of a rubber polymer latex (A-1), 1.2 parts of PO, 1.1 parts of Rongalit and 150 parts of deionized water were placed in a nitrogen-substituted flask. The temperature in the flask was maintained at 70°C, and in the first step, a mixture of 20 parts of St and 0.4 part of CHP was added dropwise thereto over 1 hour and the solution was then retained for 1 hour. Afterward, in the second step, a mixture of 35 parts of MMA and 0.7 part of CHP was continuously added dropwise thereto over 1 hour in the presence of the polymer obtained in the previous step. Afterward, the solution was then retained for 2 hours to bring polymerization to an end (average particle diameter = 0.19 $\mu$m).

Next, to the resultant graft copolymer latex was added 0.5 part of BHT, and a 0.2% by weight aqueous sulfuric acid solution was then added to coagulate the copolymer latex. This copolymer latex was subjected to a heat treatment at 90°C to solidify the same. Afterward, the resultant solid was washed with warm water, and then dried to obtain a graft copolymer (B-3) powder.

Synthesis of a graft copolymer (B-4)

10

60 parts (in terms of a solid) of a rubber polymer latex (A-3), 1.2 parts of PO and 0.03 part of dioctyl sodium sulfosuccinate were placed in a nitrogen-substituted flask. After the mixture was sufficiently stabilized, 30 parts of a 0.2% aqueous hydrochloric acid solution were slowly added thereto to agglomerate and enlarge the latex, and the pH of the latex was then returned to 7.0 with an aqueous sodium hydroxide solution. 0.8 part of Rongalit and 200 parts of deionized water were placed in the nitrogen-substituted flask. Next, the temperature in the flask was maintained at 70°C, and a mixture of 40 parts of MMA and 0.8 part of CHP was added dropwise thereto over 1 hour. Afterward, the solution was then retained for 1 hour to bring polymerization to an end (average particle diameter = 0.25 $\mu$m).

Next, to the resultant graft copolymer latex was added 0.5 part of BHT, and a 0.2% by weight aqueous sulfuric acid solution was then added to coagulate the copolymer latex. This latex was subjected to a heat treatment at 90°C to solidify it. Afterward, the resultant solid was washed with warm water, and then dried to obtain a graft copolymer (B-4) powder.

Synthesis of a graft copolymer (B-5)

60 parts (in terms of a solid) of a rubber polymer latex (A-4), 1.2 parts of PO, 0.8 part of Rongalit and 150 parts of deionized water were placed in a nitrogen-substituted flask. The temperature in the flask was maintained at 70°C, and a mixture of 40 parts of MMA and 0.8 part of CHP was added dropwise thereto over 1 hour. Afterward, the solution was then retained for 1 hour to bring polymerization to an end (average particle diameter = 0.18 $\mu$m).

Next, to the resultant graft copolymer latex was added 0.5 part of BHT, and a 0.2% by weight aqueous sulfuric acid solution was then added to coagulate the copolymer latex. This copolymer latex was subjected to a heat treatment at 90°C to solidify the same. Afterward, the resultant solid was washed with warm water, and then dried to obtain a graft copolymer (B-5) powder.

Synthesis of a graft copolymer (B-6)

70 parts (in terms of a solid) of a rubber polymer latex (A-5), 1.2 parts of PO, 0.6 part of Rongalit and 150 parts of deionized water were placed in a nitrogen-substituted flask. The temperature in the flask was maintained at 70°C, and in the first step, a mixture of 5 parts of St and 0.1 part of CHP was added dropwise thereto over 1 hour and the solution was then retained for 1 hour. Afterward, in the second step, a mixture of 25 parts of MMA and 0.5 part of CHP was continuously added dropwise thereto over 1 hour in the presence of the polymer obtained in the previous step. Afterward, the solution was then retained for 2 hours to bring polymerization to an end (average particle diameter = 0.17 $\mu$m).

Next, to the resultant graft copolymer latex was added 0.5 part of BHT, and a 0.2% by weight aqueous sulfuric acid solution was then added to coagulate the copolymer latex. This copolymer latex was subjected to a heat treatment at 90°C to solidify the same. Afterward, the resultant solid was washed with warm water, and then dried to obtain a graft copolymer (B-6) powder.

Synthesis of a graft copolymer (B-7)

60 parts (in terms of a solid) of a rubber polymer latex (A-9), 1.2 parts of PO, 0.8 part of Rongalit and 150 parts of deionized water were placed in a nitrogen-substituted flask. The temperature in the flask was maintained at 70°C, and in the first step, a mixture of 18 parts of St, 2 parts of DVB and 0.4 part of CHP was added dropwise thereto over 1 hour and the solution was then retained for 1 hour. Afterward, in the second step, a mixture of 18 parts of MMA, 2 parts of DVB and 0.4 part of CHP was continuously added dropwise thereto over 1 hour in the presence of the polymer obtained in the previous step. Afterward, the solution was then retained for 2 hours to bring polymerization to an end (average particle diameter = 0.52 $\mu$m).

Next, to the resultant graft copolymer latex was added 0.5 part of BHT, and a 0.2% by weight aqueous sulfuric acid solution was then added to coagulate the copolymer latex. This copolymer latex was subjected to a heat treatment at 90°C to solidify the same. Afterward, the resultant solid was washed with warm water, and then dried to obtain a graft copolymer (B-7) powder.

Synthesis of a graft copolymer (B-8)

80 parts (in terms of a solid) of a rubber polymer latex (A-10), 1.2 parts of PO, 0.4 part of Rongalit and 150 parts of deionized water were placed in a nitrogen-substituted flask. The temperature in the flask was maintained at 70°C, and in the first step, a mixture of 19 parts of MMA, 1 part of 1,3BD and 0.4 part of CHP was added dropwise thereto over 1 hour and the solution was then retained for 1 hour to bring polymerization to an end (average particle diameter = 0.14 $\mu$m).

Next, to the resultant graft copolymer latex was added 0.5 part of BHT, and a 0.2% by weight aqueous sulfuric acid solution was then added to coagulate the copolymer latex. This latex was subjected to a heat treatment at 90°C to solidify the same. Afterward, the resultant solid was washed with warm water, and then dried to obtain a graft copolymer (B-8) powder.

Synthesis of a graft copolymer (B-9)

45 parts (in terms of a solid) of a rubber polymer latex (A-11), 1.2 parts of PO and 0.03 part of dioctyl sodium sulfosuccinate were placed in a nitrogen-substituted flask. After the mixture was sufficiently stabilized, 30 parts of a 0.2% aqueous hydrochloric acid solution were slowly added thereto to agglomerate and enlarge the latex, and the pH of the latex was then returned to 7.0 with an aqueous sodium hydroxide solution. 1.1 parts of Rongalit and 200 parts of deionized water were placed in the nitrogen-substituted flask. Next, the temperature in the flask was maintained at 70°C, and in the first step, a mixture of 22 parts of MMA, 4 parts of 1,3BD and 0.52 part of CHP was added dropwise thereto over 1 hour and the solution was then retained for 1 hour. Afterward, in the second step, a mixture of 18 parts of St, 4 parts of DVB and 0.44 part of CHP was continuously added dropwise thereto over 1 hour in the presence of the polymer obtained in the previous step, and the solution was then retained for 2 hours. Then, in the third step, a mixture of 5 parts of MMA, 2 parts of 1,3BD and 0.14 part of CHP was continuously added dropwise over 50 minutes in the presence of a polymer obtained in the first and second steps, and the solution was then retained for 1 hour to bring polymerization to an end (average particle diameter = 0.26 $\mu$m).

Next, to the resultant graft copolymer latex was added 0.5 part of BHT, and a 0.2% by weight aqueous sulfuric acid solution was then added to coagulate the copolymer latex. This latex was subjected to a heat treatment at 90°C to solidify the same. Afterward, the resultant solid was washed with warm water, and then dried to obtain a graft copolymer (B-9) powder.

Synthesis of a graft copolymer (B-10)

70 parts (in terms of a solid) of a rubber polymer latex (A-12), 1.2 parts of PO, 0.6 part of Rongalit and 150 parts of deionized water were placed in a nitrogen-substituted flask. The temperature in the flask was maintained at 70°C, and in the first step, a mixture of 10 parts of St, 0.1 part of 1,3BD and 0.2 part of CHP was added dropwise thereto over 1 hour and the solution was then retained for 1 hour. Afterward, in the second step, a mixture of 19.8 parts of MMA, 0.1 part of 1,3BD and 0.4 part of CHP was continuously added dropwise thereto over 1 hour in the presence of the polymer obtained in the previous step. Afterward, the solution was then retained for 2 hours to bring polymerization to an end (average particle diameter = 0.38 $\mu$m).

Next, to the resultant graft copolymer latex was added 0.5 part of BHT, and a 0.2% by weight aqueous sulfuric acid solution was then added to coagulate the copolymer latex. This latex was subjected to a heat treatment at 90°C to solidify the same. Afterward, the resultant solid was washed with warm water, and then dried to obtain a graft copolymer (B-10) powder.

Synthesis of a graft copolymer (B-11)

60 parts (in terms of a solid) of a rubber polymer latex (A-10), 1.2 parts of PO, 0.8 part of Rongalit and 150 parts of deionized water were placed in a nitrogen-substituted flask. The temperature in the flask was maintained at 70°C, and in the first step, a mixture of 24 parts of St, 3 parts of DVB and 0.54 part of CHP was added dropwise thereto over 1 hour and the solution was then retained for 1 hour. Afterward, in the second step, a mixture of 12 parts of MMA, 1 part of DVB and 0.26 part of CHP was added dropwise thereto over 1 hour in the presence of the polymer obtained in the previous step and the solution was then retained for 2 hours to bring polymerization to an end (average particle diameter = 0.15 $\mu$m).

Next, to the resultant graft copolymer latex was added 0.5 part of BHT, and a 0.2% by weight aqueous sulfuric acid solution was then added to coagulate the copolymer latex. This latex was subjected to a heat treatment at 90°C to solidify the same. Afterward, the resultant solid was washed with warm water, and then dried to obtain a graft copolymer (B-11) powder.

Synthesis of a graft copolymer (B-12)

EP 0 526 895 A2

65 parts (in terms of a solid) of a rubber polymer latex (A-14), 1.2 parts of PO, 0.7 part of Rongalit and 150 parts of deionized water were placed in a nitrogen-substituted flask. The temperature in the flask was maintained at 70°C, and in the first step, a mixture of 17 parts of MMA, 2 parts of DVB and 0.38 part of CHP was added dropwise thereto over 1 hour and the solution was then retained for 1 hour. Afterward, in the second step, a mixture of 16 parts of MMA and 0.32 part of CHP was continuously added dropwise thereto over 1 hour in the presence of the polymer obtained in the previous step, and the solution was then retained for 2 hours to bring polymerization to an end (average particle diameter = 0.30 $\mu$m).

Next, to the resultant graft copolymer latex was added 0.5 part of BHT, and a 0.2% by weight aqueous sulfuric acid solution was then added to coagulate the copolymer latex. This latex was subjected to a heat treatment at 90°C to solidify the same. Afterward, the resultant solid was washed with warm water, and then dried to obtain a graft copolymer (B-12) powder.

Synthesis of a graft copolymer (B-13)

80 parts (in terms of a solid) of a rubber polymer latex (A-15), 1.2 parts of PO, 0.4 part of Rongalit and 150 parts of deionized water were placed in a nitrogen-substituted flask. The temperature in the flask was maintained at 70°C, and in the first step, a mixture of 5 parts of St and 0.1 part of CHP was added dropwise thereto over 1 hour and the solution was then retained for 1 hour. Afterward, in the second step, a mixture of 14 parts of MMA, 1 part of 1,3BD and 0.3 part of CHP was continuously added dropwise thereto over 1 hour in the presence of the polymer obtained in the previous step, and the solution was then retained for 2 hours to bring polymerization to an end (average particle diameter = 0.21 $\mu$m).

Next, to the resultant graft copolymer latex was added 0.5 part of BHT, and a 0.2% by weight aqueous sulfuric acid solution was then added to coagulate the copolymer latex. This latex was subjected to a heat treatment at 90°C to solidify the same. Afterward, the resultant solid was washed with warm water, and then dried to obtain a graft copolymer (B-13) powder.

Synthesis of a graft copolymer (B-14)

70 parts (in terms of a solid) of a rubber polymer latex (A-17), 1.2 parts of PO, 0.6 part of Rongalit and 150 parts of deionized water were placed in a nitrogen-substituted flask. The temperature in the flask was maintained at 70°C, and in the first step, a mixture of 28 parts of MMA and 2 parts of 1,3BD and 0.6 part of CHP was added dropwise thereto over 1 hour and the solution was then retained for 2 hours to bring polymerization to an end (average particle diameter = 0.26 $\mu$m).

Next, to the resultant graft copolymer latex was added 0.5 part of BHT, and a 0.2% by weight aqueous sulfuric acid solution was then added to coagulate the copolymer latex. This latex was subjected to a heat treatment at 90°C to solidify the same. Afterward, the resultant solid was washed with warm water, and then dried to obtain a graft copolymer (B-14) powder.

Synthesis of a graft copolymer (C-1)

40 parts (in terms of a solid) of a rubber polymer latex (A-6), 1.2 parts of PO, 1.2 parts of Rongalit and 150 parts of deionized water were placed in a nitrogen-substituted flask. The temperature in the flask was maintained at 70°C, and in the first step, a mixture of 33 parts of St and 0.66 part of CHP was added dropwise thereto over 1 hour and the solution was then retained for 1 hour. Afterward, in the second step, a mixture of 27 parts of MMA and 0.54 part of CHP was continuously added dropwise thereto over 1 hour in the presence of the polymer obtained in the previous step, and the solution was then retained for 2 hours to bring polymerization to an end (average particle diameter = 0.19 $\mu$m).

Next, to the resultant graft copolymer latex was added 0.5 part of BHT, and a 0.2% by weight aqueous sulfuric acid solution was then added to coagulate the copolymer latex. This latex was subjected to a heat treatment at 90°C to solidify the same. Afterward, the resultant solid was washed with warm water, and then dried to obtain a graft copolymer (C-1) powder.

Synthesis of a graft copolymer (C-2)

60 parts (in terms of a solid) of a rubber polymer latex (A-6), 1.2 parts of PO, 0.8 part of Rongalit and 150 parts of deionized water were placed in a nitrogen-substituted flask. The temperature in the flask was maintained at 70°C, and in the first step, a mixture of 20 parts of St and 0.4 part of CHP was added dropwise thereto over 1 hour and the solution was then retained for 1 hour. Afterward, in the second step, a

13

mixture of 20 parts of MMA and 0.4 part of CHP was continuously added dropwise thereto over 1 hour in the presence of the polymer obtained in the previous step, and the solution was then retained for 2 hours to bring polymerization to an end (average particle diameter = 0.18 $\mu$m).

Next, to the resultant graft copolymer latex was added 0.5 part of BHT, and a 0.2% by weight aqueous sulfuric acid solution was then added to coagulate the copolymer latex. This latex was subjected to a heat treatment at 90°C to solidify the same. Afterward, the resultant solid was washed with warm water, and then dried to obtain a graft copolymer (C-2) powder.

Synthesis of a graft copolymer (C-3)

25 parts (in terms of a solid) of a rubber polymer latex (A-1), 1.2 parts of PO and 0.03 part of dioctyl sodium sulfosuccinate were placed in a nitrogen-substituted flask. After the mixture was sufficiently stabilized, 30 parts of a 0.2% aqueous hydrochloric acid solution were slowly added thereto to agglomerate and enlarge the latex, and the pH of the latex was then returned to 7.0 with an aqueous sodium hydroxide solution. 1.5 parts of Rongalit and 200 parts of deionized water were placed in the nitrogen-substituted flask. Next, the temperature in the flask was maintained at 70°C, and a mixture of 75 parts of MMA and 1.5 parts of CHP was added dropwise thereto over 1 hour and the solution was then retained for 1 hour to bring polymerization to an end (average particle diameter = 0.30 $\mu$m).

Next, to the resultant graft copolymer latex was added 0.5 part of BHT, and a 0.2% by weight aqueous sulfuric acid solution was then added to coagulate the copolymer latex. This latex was subjected to a heat treatment at 90°C to solidify the same. Afterward, the resultant solid was washed with warm water, and then dried to obtain a graft copolymer (C-3) powder.

Synthesis of a graft copolymer (C-4)

90 parts (in terms of a solid) of a rubber polymer latex (A-1), 1.2 parts of PO, 0.8 part of Rongalit and 150 parts of deionized water were placed in a nitrogen-substituted flask. The temperature in the flask was maintained at 70°C, and a mixture of 10 parts of MMA and 0.2 part of CHP was added dropwise thereto over 1 hour and the solution was then retained for 1 hour to bring polymerization to an end (average particle diameter = 0.16 $\mu$m).

Next, to the resultant graft copolymer latex was added 0.5 part of BHT, and a 0.2% by weight aqueous sulfuric acid solution was then added to coagulate the copolymer latex. This latex was subjected to a heat treatment at 90°C to solidify the same. Afterward, the resultant solid was washed with warm water, and then dried to obtain a graft copolymer (C-4) powder.

Synthesis of a graft copolymer (C-5)

60 parts (in terms of a solid) of a rubber polymer latex (A-7), 1.2 parts of PO, 0.8 part of Rongalit and 150 parts of deionized water were placed in a nitrogen-substituted flask. The temperature in the flask was maintained at 70°C, and in the first step, a mixture of 10 parts of St and 0.2 part of CHP was added dropwise thereto over 1 hour and the solution was then retained for 1 hour. Afterward, in the second step, a mixture of 30 parts of MMA and 0.6 part of CHP was continuously added dropwise thereto over 1 hour in the presence of the polymer obtained in the previous step, and the solution was then retained for 2 hours to bring polymerization to an end (average particle diameter = 0.18 $\mu$m).

Next, to the resultant graft copolymer latex was added 0.5 part of BHT, and a 0.2% by weight aqueous sulfuric acid solution was then added to coagulate the copolymer latex. This latex was subjected to a heat treatment at 90°C to solidify the same. Afterward, the resultant solid was washed with warm water, and then dried to obtain a graft copolymer (C-5) powder.

Synthesis of a graft copolymer (C-6)

70 parts (in terms of a solid) of a rubber polymer latex (A-8), 1.2 parts of PO, 0.8 part of Rongalit and 150 parts of deionized water were placed in a nitrogen-substituted flask. The temperature in the flask was maintained at 70°C, and in the first step, a mixture of 5 parts of St and 0.1 part of CHP was added dropwise thereto over 1 hour and the solution was then retained for 1 hour. Afterward, in the second step, a mixture of 25 parts of MMA and 0.5 part of CHP was continuously added dropwise thereto over 1 hour in the presence of the polymer obtained in the previous step, and the solution was then retained for 2 hours to bring polymerization to an end (average particle diameter = 0.17 $\mu$m).

Next, to the resultant graft copolymer latex was added 0.5 part of BHT, and a 0.2% by weight aqueous sulfuric acid solution was then added to coagulate the copolymer latex. This latex was subjected to a heat treatment at 90°C to solidify the same. Afterward, the resultant solid was washed with warm water, and then dried to obtain a graft copolymer (C-6) powder.

Synthesis of a graft copolymer (C-7)

75 parts (in terms of a solid) of a rubber polymer latex (A-9), 1.2 parts of PO, 0.5 part of Rongalit and 150 parts of deionized water were placed in a nitrogen-substituted flask. The temperature in the flask was maintained at 70°C, and a mixture of 25 parts of MMA and 0.5 part of CHP was added dropwise thereto over 1 hour and the solution was then retained for 1 hour to bring polymerization to an end (average particle diameter = 0.50 μm).

Next, to the resultant graft copolymer latex was added 0.5 part of BHT, and a 0.2% by weight aqueous sulfuric acid solution was then added to coagulate the copolymer latex. This latex was subjected to a heat treatment at 90°C to solidify the same. Afterward, the resultant solid was washed with warm water, and then dried to obtain a graft copolymer (C-7) powder.

Synthesis of a graft copolymer (C-8)

25 parts (in terms of a solid) of a rubber polymer latex (A-10), 1.2 parts of PO, 1.5 parts of Rongalit and 150 parts of deionized water were placed in a nitrogen-substituted flask. The temperature in the flask was maintained at 70°C, and in the first step, a mixture of 32 parts of St, 1 part of DVB and 0.66 part of CHP was added dropwise thereto over 1 hour and the solution was then retained for 1 hour. Afterward, in the second step, a mixture of 41 parts of MMA, 1 part of 1,3BD and 0.84 part of CHP was continuously added dropwise thereto over 1 hour in the presence of the polymer obtained in the previous step, and the solution was then retained for 2 hours to bring polymerization to an end (average particle diameter = 0.16 μm).

Next, to the resultant graft copolymer latex was added 0.5 part of BHT, and a 0.2% by weight aqueous sulfuric acid solution was then added to coagulate the copolymer latex. This latex was subjected to a heat treatment at 90°C to solidify the same. Afterward, the resultant solid was washed with warm water, and then dried to obtain a graft copolymer (C-8) powder.

Synthesis of a graft copolymer (C-9)

95 parts (in terms of a solid) of a rubber polymer latex (A-11), 1.2 parts of PO, 0.1 part of Rongalit and 150 parts of deionized water were placed in a nitrogen-substituted flask. The temperature in the flask was maintained at 70°C, and a mixture of 4.5 parts of MMA, 0.5 part of 1,3BD and 0.1 part of CHP was added dropwise thereto over 1 hour and the solution was then retained for 1 hour to bring polymerization to an end (average particle diameter = 0.11 μm).

Next, to the resultant graft copolymer latex was added 0.5 part of BHT, and a 0.2% by weight aqueous sulfuric acid solution was then added to coagulate the copolymer latex. This latex was subjected to a heat treatment at 90°C to solidify the same. Afterward, the resultant solid was washed with warm water, and then dried to obtain a graft copolymer (C-9) powder.

Synthesis of a graft copolymer (C-10)

70 parts (in terms of a solid) of a rubber polymer latex (A-12), 1.2 parts of PO, 0.6 part of Rongalit and 150 parts of deionized water were placed in a nitrogen-substituted flask. The temperature in the flask was maintained at 70°C, and a mixture of 22 parts of MMA, 8 parts of DVB and 0.6 part of CHP was added dropwise thereto over 1 hour and the solution was then retained for 1 hour to bring polymerization to an end (average particle diameter = 0.35 μm).

Next, to the resultant graft copolymer latex was added 0.5 part of BHT, and a 0.2% by weight aqueous sulfuric acid solution was then added to coagulate the copolymer latex. This latex was subjected to a heat treatment at 90°C to solidify the same. Afterward, the resultant solid was washed with warm water, and then dried to obtain a graft copolymer (C-10) powder.

Synthesis of a graft copolymer (C-11)

65 parts (in terms of a solid) of a rubber polymer latex (A-13), 1.2 parts of PO, 0.7 part of Rongalit and 150 parts of deionized water were placed in a nitrogen-substituted flask. The temperature in the flask was maintained at 70°C, and in the first step, a mixture of 20 parts of St, 2 parts of DVB and 0.44 part of CHP was added dropwise thereto over 1 hour and the solution was then retained for 1 hour. Afterward, in the second step, a mixture of 22 parts of MMA, 1 part of 1,3BD and 0.46 part of CHP was continuously added dropwise thereto over 1 hour in the presence of the polymer obtained in the previous step, and the solution was then retained for 2 hours to bring polymerization to an end (average particle diameter = 0.26 μm).

Next, to the resultant graft copolymer latex was added 0.5 part of BHT, and a 0.2% by weight aqueous sulfuric acid solution was then added to coagulate the copolymer latex. This latex was subjected to a heat treatment at 90°C to solidify the same. Afterward, the resultant solid was washed with warm water, and then dried to obtain a graft copolymer (C-11) powder.

Synthesis of a graft copolymer (C-12)

75 parts (in terms of a solid) of a rubber polymer latex (A-11), 1.2 parts of PO and 0.03 part of dioctyl sodium sulfosuccinate were placed in a nitrogen-substituted flask. After the mixture was sufficiently stabilized, 30 parts of a 0.2% aqueous hydrochloric acid solution were slowly added thereto to agglomerate and enlarge the latex, and the pH of the latex was then returned to 7.0 with an aqueous sodium hydroxide solution. 1.5 parts of Rongalit and 200 parts of deionized water were placed in the nitrogen-substituted flask. Next, the temperature in the flask was maintained at 70°C, and in the first step, a mixture of 20 parts of St, 2 parts of DBV and 0.44 part of CHP was added dropwise thereto over 1 hour and the solution was then retained for 1 hour. Afterward, in the second step, a mixture of 2.5 parts of MMA, 0.5 part of 1,3BD and 0.06 part of CHP was continuously added dropwise thereto over 1 hour and the solution was then retained for 2 hours to bring polymerization to an end (average particle diameter = 0.24 μm).

Next, to the resultant graft copolymer latex was added 0.5 part of BHT, and a 0.2% by weight aqueous sulfuric acid solution was then added to coagulate the copolymer latex. This latex was subjected to a heat treatment at 90°C to solidify the same. Afterward, the resultant solid was washed with warm water, and then dried to obtain a graft copolymer (C-12) powder.

Synthesis of a graft copolymer (C-13)

70 parts (in terms of a solid) of a rubber polymer latex (A-16), 1.2 parts of PO, 0.6 part of Rongalit and 150 parts of deionized water were placed in a nitrogen-substituted flask. The temperature in the flask was maintained at 70°C, and in the first step, a mixture of 14 parts of St, 1 part of DBV and 0.3 part of CHP was added dropwise thereto over 1 hour and the solution was then retained for 1 hour. Afterward, in the second step, a mixture of 14 parts of MMA, 1 part of DVB and 0.3 part of CHP was continuously added dropwise thereto over 1 hour in the presence of the polymer obtained in the previous step, and the solution was then retained for 2 hours to bring polymerization to an end (average particle diameter = 0.15 μm).

Next, to the resultant graft copolymer latex was added 0.5 part of BHT, and a 0.2% by weight aqueous sulfuric acid solution was then added to coagulate the copolymer latex. This latex was subjected to a heat treatment at 90°C to solidify the same. Afterward, the resultant solid was washed with warm water, and then dried to obtain a graft copolymer (C-13) powder.

(3) Preparation of epoxy resin composition for sealing

Examples 1 to 16, Comparative Examples 1 to 15

Each of graft copolymers shown in Table 1 was added, in a ratio shown in Table 2, to 100 parts by weight of a composition comprising 17% by weight of a cresol novolak epoxy resin (epoxy equivalent = 230), 3.0% by weight of a brominated epoxy resin, 10% by weight of a phenolic novolak resin, 1.0% by weight of 2-undecylimidazole, 0.4% by weight of carnauba wax, 0.2% by weight of carbon black, 0.4% by weight of a silane coupling agent, 2.0% by weight of antimony trioxide and 66% by weight of crystalline silica. Afterward, these materials were mixed by the use of a mixer at ordinary temperature and further kneaded at 90-95°C by means of heating rolls. After cooling, the mixture was ground to form a molding material. These compositions were evaluated, and the results are set forth in Table 2. The evaluation was made on the basis of the following tests, and procedures of these tests were as follows:

Spiral flow: Each spiral flow was measured in molding 20 g of an epoxy resin composition at 175°C under a plunger pressure of 70 kg/cm$^2$ by the use of a mold in accordance with EMMI-1-66.

Heat cycle test resistance: Molded articles having a size of 20 mm × 15 mm × 3 mm in which copper plates having a size of 15 mm × 15 mm × 1 mm were put on the bottom were alternately placed in thermostatic chambers at -50°C and 200°C every 30 minutes, and this operation was carried out 20 cycles. Afterward, cracks were inspected.

Humidity resistance: Each epoxy resin composition was molded at 180°C for 2 minutes by a low-pressure transfer molding method to obtain elements for a pressure cracker. For these elements, a pressure cracker test was made at 120°C under 2 atm to measure a time when an aluminum wire had been cut.

Maximum particle diameter of graft copolymer:

Molded articles of an epoxy resin composition were observed by the use of an electron microscope, and the maximum particle diameter of the graft copolymer dispersed in the molded articles was measured.

Table 1 (I)

| Graft Copolymer | Rubber Polymer Composition | | | | |
|---|---|---|---|---|---|
| | Kind | Bd | St | Poly-Functional Monomer | wt.% |
| B-1 | A-1 | 73 | 22 | DVB 5 | 60 |
| B-2 | A-2 | 78 | 12 | DVB 10 | 75 |
| B-3 | A-1 | 73 | 22 | DVB 5 | 45 |
| B-4 | A-3 | 60 | 22 | 1,3BD 18 | 60 |
| B-5 | A-4 | 95 | | 1,3BD 5 | 60 |
| B-6 | A-5 | 80 | 19.8 | 1,3BD 0.2 | 70 |
| B-7 | A-9 | 100 | | | 60 |
| B-8 | A-10 | 80 | 17 | DVB 3 | 80 |
| B-9 | A-11 | 60 | 40 | | 45 |
| B-10 | A-12 | 75 | 20 | DVB 5 | 70 |
| B-11 | A-10 | 80 | 17 | DVB 3 | 60 |
| B-12 | A-14 | 78 | 12 | DVB 10 | 65 |
| B-13 | A-15 | 82 | | DVB 18 | 80 |
| B-14 | A-17 | 80 | 20 | | 70 |
| C-1 | A-6 | 75 | 25 | | 40 |
| C-2 | A-6 | 75 | 25 | | 60 |
| C-3 | A-1 | 73 | 22 | DVB 5 | 25 |
| C-4 | A-1 | 73 | 22 | DVB 5 | 90 |
| C-5 | A-7 | 35 | 55 | 1,3 BD 10 | 60 |
| C-6 | A-8 | 60 | 10 | DVB 30 | 70 |
| C-7 | A-9 | 100 | | | 75 |
| C-8 | A-10 | 80 | 17 | DVB 3 | 25 |
| C-9 | A-11 | 60 | 40 | | 95 |
| C-10 | A-12 | 75 | 20 | DVB 5 | 70 |
| C-11 | A-13 | 40 | 60 | | 65 |
| C-12 | A-11 | 60 | 40 | | 75 |
| C-13 | A-16 | 60 | 16 | DVB 24 | 70 |

EP 0 526 895 A2

Table 1 (II)

| Graft Copolymer | In the First Step | | In the Second Step | |
|---|---|---|---|---|
| | Monomer (wt%) | Poly-Functional Monomer (wt%) | Monomer (wt%) | Poly-Functional Monomer (wt%) |
| B-1 | MMA(40) | | | |
| B-2 | St(5) | | MMA(20) | |
| B-3 | St(20) | | MMA(35) | |
| B-4 | MMA(40) | | | |
| B-5 | MMA(40) | | | |
| B-6 | St(5) | | MMA(25) | |
| B-7 | St(18) | DVB(2) | MMA(18) | DVB(2) |
| B-8 | MMA(19) | 1,3BD(1) | | |
| B-9 | MMA(22) | 1,3BD(4) | St(18) | DVB(4) |
| B-10 | St(10) | 1,3BD(0.1) | MMA(19.8) | 1,3BD(0.1) |
| B-11 | St(24) | DVB(3) | MMA(12) | DVB(1) |
| B-12 | MMA(17) | DVB(2) | MMA(16) | |
| B-13 | St(5) | | MMA(14) | 1,3BD(1) |
| B-14 | MMA(28) | 1,3BD(2) | | |
| C-1 | St(33) | | MMA(27) | |
| C-2 | St(20) | | MMA(20) | |
| C-3 | MMA(75) | | | |
| C-4 | MMA(10) | | | |
| C-5 | St(10) | | MMA(30) | |
| C-6 | St(5) | | MMA(25) | |
| C-7 | MMA(25) | | | |
| C-8 | St(32) | DVB(1) | MMA(41) | 1,3BD(1) |
| C-9 | MMA(4.5) | 1,3BD(0.5) | | |
| C-10 | MMA(22) | DVB(8) | | |
| C-11 | St(20) | DVB(2) | MMA(22) | 1,3BD(1) |
| C-12 | St(20) | DVB(2) | MMA(2.5) | 1,3BD(0.5) |
| C-13 | St(14) | DVB(1) | MMA(14) | DVB(1) |

18

Table 1 (III)

| Graft Copolymer | In the Third Step | | Particle Diameter (μm) |
|---|---|---|---|
| | Monomer (wt%) | Poly-Functional Monomer (wt%) | |
| B-1 | | | 0.18 |
| B-2 | | | 0.17 |
| B-3 | | | 0.19 |
| B-4 | | | 0.25 |
| B-5 | | | 0.18 |
| B-6 | | | 0.17 |
| B-7 | | | 0.52 |
| B-8 | | | 0.14 |
| B-9 | MMA(5) | 1,3BD(2) | 0.26 |
| B-10 | | | 0.38 |
| B-11 | | | 0.15 |
| B-12 | | | 0.30 |
| B-13 | | | 0.21 |
| B-14 | | | 0.26 |
| C-1 | | | 0.19 |
| C-2 | | | 0.18 |
| C-3 | | | 0.30 |
| C-4 | | | 0.16 |
| C-5 | | | 0.18 |
| C-6 | | | 0.17 |
| C-7 | | | 0.50 |
| C-8 | | | 0.16 |
| C-9 | | | 0.11 |
| C-10 | | | 0.35 |
| C-11 | | | 0.26 |
| C-12 | | | 0.24 |
| C-13 | | | 0.15 |

## Table 2 (I)

| | 1 | 2 | Example 3 | 4 | 5 | 6 | 7 | 8 |
|---|---|---|---|---|---|---|---|---|
| Kind of Graft Copolymer | B-1 | B-1 | B-1 | B-2 | B-3 | B-4 | B-5 | B-6 |
| Amount of Graft Copolymer (parts by weight) | 3 | 10 | 18 | 3 | 3 | 3 | 3 | 3 |
| Spiral Flow (cm) | 100 | 100 | 90 | 105 | 105 | 110 | 95 | 90 |
| Glass Transition Point (°C) | 161 | 158 | 155 | 162 | 163 | 163 | 159 | 156 |
| Flexural Modulus (kg/mm$^2$) | 1370 | 1340 | 1310 | 1430 | 1400 | 1460 | 1330 | 1340 |
| Flexural Strength (kg/mm$^2$) | 14.3 | 14.4 | 14.4 | 14.1 | 14.3 | 14.0 | 14.3 | 14.3 |
| Heat Cycle Test Resistance (crack number/sample number) | 0/20 | 0/20 | 0/20 | 0/20 | 0/20 | 3/20 | 0/20 | 0/20 |
| Humidity Resistance (PCT) (hr) | 1200 | 1100 | 1100 | 1250 | 1200 | 1250 | 1100 | 1150 |
| Maximum Particle Diameter of Graft Copolymer (μm) | 35 | 35 | 35 | 30 | 25 | 20 | 40 | 45 |

EP 0 526 895 A2

## Table 2 (II)

| | Example | | | | | | | |
| --- | --- | --- | --- | --- | --- | --- | --- | --- |
| | 9 | 10 | 11 | 12 | 13 | 14 | 15 | 16 |
| Kind of Graft Copolymer | B-7 | B-8 | B-9 | B-10 | B-11 | B-12 | B-13 | B-14 |
| Amount of Graft Copolymer (parts by weight) | 3 | 3 | 3 | 3 | 3 | 3 | 3 | 3 |
| Spiral Flow (cm) | 95 | 100 | 105 | 95 | 90 | 100 | 110 | 95 |
| Glass Transition Point (°C) | 158 | 160 | 161 | 159 | 159 | 162 | 163 | 159 |
| Flexural Modulus (kg/mm$^2$) | 1320 | 1360 | 1400 | 1360 | 1370 | 1410 | 1430 | 1350 |
| Flexural Strength (kg/mm$^2$) | 14.4 | 14.3 | 14.2 | 14.3 | 14.2 | 14.1 | 14.1 | 14.3 |
| Heat Cycle Test Resistance (crack number/sample number) | 0/20 | 0/20 | 2/20 | 0/20 | 0/20 | 1/20 | 3/20 | 0/20 |
| Humidity Resistance (PCT) (hr) | 1100 | 1200 | 1200 | 1150 | 1100 | 1200 | 1200 | 1150 |
| Maximum Particle Diameter of Graft Copolymer (μm) | 45 | 35 | 30 | 50 | 35 | 30 | 30 | 40 |

EP 0 526 895 A2

<u>Table 2 (III)</u>

| | 1 | Comparative Example 2 | 3 | 4 | 5 | 6 | 7 | 8 |
|---|---|---|---|---|---|---|---|---|
| Kind of Graft Copolymer | – | B-1 | C-1 | C-2 | C-3 | C-4 | C-5 | C-6 |
| Amount of Graft Copolymer (parts by weight) | 0 | 24 | 3 | 3 | 3 | 3 | 3 | 3 |
| Spiral Flow (cm) | 55 | 65 | 60 | 50 | 105 | 70 | 100 | 105 |
| Glass Transition Point (°C) | 163 | 151 | 158 | 155 | 162 | 159 | 160 | 163 |
| Flexural Modulus (kg/mm$^2$) | 1480 | 1260 | 1310 | 1300 | 1410 | 1320 | 1440 | 1480 |
| Flexural Strength (kg/mm$^2$) | 14.0 | 14.3 | 14.0 | 14.1 | 13.8 | 14.1 | 14.0 | 13.7 |
| Heat Cycle Test Resistance (crack number/sample number) | 9/20 | 0/20 | 5/20 | 2/20 | 7/20 | 1/20 | 6/20 | 10/20 |
| Humidity Resistance (PCT) (hr) | 900 | 1050 | 1100 | 1050 | 1000 | 950 | 1150 | 1100 |
| Maximum Particle Diameter of Graft Copolymer ($\mu$m) | – | 35 | 100 | 150 | 50 | 300 | 50 | 35 |

EP 0 526 895 A2

## Table 2 (IV)

| | Comparative Example | | | | | | |
|---|---|---|---|---|---|---|---|
| | 9 | 10 | 11 | 12 | 13 | 14 | 15 |
| Kind of Graft Copolymer | C-7 | C-8 | C-9 | C-10 | C-11 | C-12 | C-13 |
| Amount of Graft Copolymer (parts by weight) | 3 | 3 | 3 | 3 | 3 | 3 | 3 |
| Spiral Flow (cm) | 65 | 105 | 65 | 100 | 95 | 70 | 105 |
| Glass Transition Point (°C) | 158 | 162 | 157 | 159 | 160 | 159 | 163 |
| Flexural Modulus (kg/mm$^2$) | 1310 | 1400 | 1270 | 1360 | 1420 | 1330 | 1460 |
| Flexural Strength (kg/mm$^2$) | 14.3 | 14.0 | 14.2 | 14.3 | 14.1 | 14.3 | 14.0 |
| Heat Cycle Test Resistance (crack number/sample number) | 0/20 | 7/20 | 2/20 | 6/20 | 5/20 | 0/20 | 8/20 |
| Humidity Resistance (PCT) (hr) | 1100 | 1000 | 950 | 1150 | 1150 | 1100 | 1000 |
| Maximum Particle Diameter of Graft Copolymer (μm) | 70 | 35 | 350 | 35 | 60 | 90 | 35 |

An epoxy resin composition for sealing is here disclosed which is characterized by comprising a composition (A) comprising an epoxy resin, a curing agent and an inorganic filler and a graft copolymer (B) obtained by graft polymerizing 65 to 15 parts by weight of a monomer mixture (b) comprising a vinyl monomer containing an alkyl methacrylate ester as an essential component in the presence of a latex containing 35 to 85 parts by weight of a rubber polymer obtained by the emulsion polymerization of a monomer mixture (a) comprising 50% by weight or more of a diene monomer and the residual percent of a copolymerizable vinyl monomer, at least one of the monomer mixture (a) and the monomer mixture (b) containing 0.05 to 20% by weight of a polyfunctional monomer.

This epoxy resin composition exhibits low stress, and it is excellent in humidity resistance, heat cycle test resistance, moldability and dispersibility and is suitable for use in electronic and electrical parts.

**Claims**

23

1. An epoxy resin composition for sealing characterized by comprising 100 parts by weight of a composition (A) comprising an epoxy resin, a curing agent and an inorganic filler and 0.1 to 20 parts by weight of a graft copolymer (B) obtained by graft polymerizing, at one time or dividedly, 65 to 15 parts by weight of a monomer mixture (b) comprising a vinyl monomer containing an alkyl methacrylate as an essential component in the presence of a latex containing 35 to 85 parts by weight of a rubber polymer obtained by the emulsion polymerization of a monomer mixture (a) comprising 50% by weight or more of a diene monomer and the residual percent of a copolymerizable vinyl monomer, at least one of the monomer mixture (a) and the monomer mixture (b) containing 0.05 to 20% by weight of a polyfunctional monomer.

2. The epoxy resin composition according to Claim 1 wherein the polyfunctional monomer is not contained in the monomer mixture (b), and 0.05 to 20% by weight of the polyfunctional monomer is contained in the monomer mixture (a).

3. The epoxy resin composition according to Claim 1 wherein the polyfunctional monomer is not contained in the monomer mixture (a), and 0.05 to 20% by weight of the polyfunctional monomer is contained in the monomer mixture (b).

4. The epoxy resin composition according to Claim 1 wherein 0.05 to 20% by weight of the polyfunctional monomer is contained in the monomer mixture (a), and 0.05 to 20% by weight of the polyfunctional monomer is contained in the monomer mixture (b).

5. The epoxy resin composition according to Claim 1 wherein 20% by weight or more of the alkyl methacrylate is contained in the monomer mixture (b).

6. The epoxy resin composition according to Claim 2 wherein 0.2 to 10% by weight of the polyfunctional monomer is contained in the monomer mixture (a).

7. The epoxy resin composition according to Claim 3 wherein 0.05 to 10% by weight of the polyfunctional monomer is contained in the monomer mixture (b).

8. The epoxy resin composition according to Claim 4 wherein 0.2 to 10% by weight of the polyfunctional monomer is contained in the monomer mixture (a), and 0.05 to 10% by weight of the polyfunctional monomer is contained in the monomer mixture (b).

9. The epoxy resin composition according to Claim 1 wherein the alkyl methacrylate contained in the monomer mixture (b) is methyl methacrylate.

10. The epoxy resin composition according to Claim 1 wherein the diene monomer contained in the monomer mixture (a) is 1,3-butadiene.